# EUROPÄISCHE PATENTSCHRIFT

(11) **EP 1 840 566 B1**
(45) Veröffentlichungstag und Bekanntmachung des Hinweises auf die Patenterteilung: **05.12.2012**
(21) Anmeldenummer: 06112037.4
(22) Anmeldetag: 30.03.2006
(51) Int. Cl.: G01N 31/22, G01N 33/18

(54) **Anordnung zur Bestimmung von Ammonium in einer Flüssigkeitsprobe**
Device for determining ammonium in a liquid sample
Dispositif destiné à la détermination d'ammonium dans un échantillon de liquide

(43) Veröffentlichungstag der Anmeldung: 03.10.2007
(73) Patentinhaber: Hach Lange GmbH, 14163 Berlin (DE)
(72) Erfinder: Kussmann, Michael, 40476, Düsseldorf (DE)
(74) Vertreter: Eberlein, Jasper

(56) Entgegenhaltungen:
- EP-A- 0 481 436
- EP-A- 1 037 045
- US-A- 4 201 548
- US-A- 5 989 840
- US-A- 6 107 099
- WERNER T ET AL: "AMMONIA-SENSITIVE POLYMER MATRIX EMPLOYING IMMOBILIZED INDICATOR ION PAIRS" ANALYST, LONDON, GB, Bd. 120, Nr. 6, Juni 1995 (1995-06), Seiten 1627-1631, XP002053853

## Beschreibung

Die Erfindung bezieht sich auf eine Anordnung zur Bestimmung von Ammonium in einer Flüssigkeitsprobe.

Die Bestimmung von Ammonium in einer Flüssigkeitsprobe wird beispielsweise in Abwasser-Kläranlagen zur Prozesskontrolle eingesetzt. Hierbei wird üblicherweise die Flüssigkeitsprobe, bestehend aus Abwasser, durch Hinzufügung von Natronlauge alkalisch gestellt. Das Ammonium wird hierbei in Ammoniak umgewandelt, das durch eine Membran hindurch, beispielsweise eine Teflon-Membran, in ein Elektrolyt diffundiert. Der Ammoniak-Gehalt in dem Elektrolyt bestimmt den pH-Wert des Elektrolyten, der durch eine pH-Elektrode gemessen wird. Um reproduzierbare Messergebnisse zu erhalten, muss das Elektrolyt auf einer konstanten Temperatur gehalten werden. Vorteilhaft sind dabei hohe Temperaturen von beispielsweise 50°C-55°C, da die beteiligten Diffusionsprozesse dann schnell ablaufen. Durch die relativ hohe Elektrolyt.

Temperatur diffundieren nicht unerhebliche Mengen Wasser des Elektrolyten durch die Membran, so dass dieser häufig erneuert werden muss. Eine pH-Elektrode hat in derartigen Anwendungen eine Lebensdauer von ungefähr 2 Jahren.

Aus Tobias Werner, Ingo Klimant und Otto S. Wolfbeis: Ammonia-sensitive Polymer Matrix Employing Immobilized Indicator Ion Pairs; Analyst, London, GB, Vol. 120, Nr. 6, Juni 1995 (1995-06), Seiten 1627 bis 1631, ist eine Sensor-Membrane bestehend aus seiner Silikon-Matrix bekannt, in die ein AmmoniumSalz und ein pH-Indikator eingelagert ist. Beim kontinuierlichen Langzeit-Einsatz einer derartigen Sensor-Membran kann es zu Auswaschungen kommen, die die Langzeit-Genauigkeit der fotometrischen quantitativen Bestimmung der Ammonium-Konzentration beeinträchtigen können. Eine mit einem floureszierenden Indikator ausgestattete Sensor-Membrane ist bekannt aus US 6,107,099.

In US 4,201,548, EP 1 037 045 A2, US 5,989,840 und EP 0 481 436 A1 werden jeweils Verfahren bzw. Vorrichtungen zur nicht-reversiblen Bestimmung des Ammoniums in einer Flüssigkeitsprobe offenbart.

Aufgabe der Erfindung ist es demgegenüber, eine Anordnung zur kontinuierlichen Ammonium-Bestimmung zu schaffen, die eine hohe Langzeitgenauigkeit sicherstellt.

Diese Aufgabe wird erfindungsgemäß gelöst mit den Merkmalen des Patentanspruches 1.

Die erfindungsgemäße Anordnung zur Ammonium-Bestimmung in einer Flüssigkeitsprobe weist ein Indikator-Element auf, das ein Indikator-Gemisch aus Ammonium-Chlorid und einem pH-Indikator aufweist, und weist eine gasdurchlässige Membran zwischen dem Indikator-Gemisch und der Flüssigkeitsprobe auf, wobei das Indikator-Gemisch gegenüber der umgebenden Atmosphäre isoliert ist, so dass das Atmosphären-Gas nicht in das Indikator-Gemisch eindringen kann. Ferner ist ein auf das Indikator-Element gerichtetes Fotometer zur Bestimmung der Farbe des Indikator-Gemisches vorgesehen.

Der pH-Wert des Indikator-Gemisches wird nicht mehr durch eine pH-Elektrode, sondern optisch durch ein Fotometer bestimmt. Ein Fotometer hat, im Gegensatz u einer pH-Elektrode, eine praktisch unbegrenzte Lebensdauer. Ferner ist eine fotometrische Bestimmung auch langfristig stabil und präzise.

Zu Beginn einer Messung diffundiert zunächst der Wasserdampf aus der Flüssigkeitsprobe durch die gasdurchlässige Membran in das Indikator-Gemisch hinein, wobei der Wasserdampf das Indikator-Gemisch auflöst, bis dessen Dampfdruck dem der Flüssigkeitsprobe entspricht. Danach bleibt der Wasseranteil in dem Indikator-Gemisch konstant. Das durch die gasdurchlässige Membran in das Indikator-Gemisch diffundierende Ammoniak-Gas verschiebt den pH-Wert der Ammonium-Chlorid-Lösung. Der pH-Wert der Ammonium-Chlorid-Lösung wirkt sich unmittelbar auf die Farbe des pH-Indikators aus. Die Farbe des pH-Indikators in dem Indikator-Gemisch wird fotometrisch bestimmt. Hierzu kann der gesamte Spektralverlauf aufgenommen werden, kann jedoch auch die Intensität einer einzelnen Spektrallinie, oder können auch die Intensitäten mehrerer Spektrallinien bestimmt werden. Hieraus wiederum kann auf den Ammonium-Gehalt in der Flüssigkeitsprobe geschlossen werden.

Es kann ein einziger pH-Indikator, es können jedoch auch mehrere pH-Indikatoren in dem Indikator-Gemisch enthalten sein. Durch geeignete Wahl des oder der pH-Indikatoren können extrem weite Messbereiche abgedeckt werden.

Die beschriebene Anordnung zur Ammonium-Bestimmung mit Hilfe eines Fotometers eignet sich insbesondere für automatische und nahezu wartungsfreie Messungen über sehr lange Zeiträume.

Das Fotometer kann in Bezug auf das Indikator-Gemisch reflexiv oder transmissiv arbeiten. Das Fotometer kann, muss jedoch keine Referenz aufweisen. Eine Referenz ist eine zusätzliche Messzelle, die die absolute Helligkeit der Lichtquelle überwacht. Hierdurch können Schwankungen der Lichtleistung rechnerisch ausgeglichen werden.

Die Membran ist gasdurchlässig, so dass auch der Wasserdampf hindurchtritt. Die Selektivität des Gesamtprozesses in Bezug auf Ammonium ergibt sich daraus, dass nur Ammonium durch die pH-Wert-Anhebung in ein Gas, nämlich Ammoniak, umgesetzt wird und als Gas die betreffende Membran passieren kann.

Gemäß einer bevorzugten Ausgestaltung ist das Indikator-Gemisch gelartig ausgebildet. Hierdurch wird eine Entmischung des Indikator-Gemisches vermieden. Insbesondere wird eine homogene Verteilung des pH-Indikators über das gesamte Volumen des Indikator-Gemisches sichergestellt. Ferner bleibt auch das Ammonium-Chlorid homogen in dem Indikator-Gemisch verteilt, und verbleibt insbesondere in der Nähe der gasdurchlässigen Membran, so dass die Einstellzeit, d.h. die Zeit, die zwischen einer Ammoniumkonzentrations-Änderung und der Erfassung dieser Änderung durch die Anordnung vergeht, relativ kurz ist.

Temperieren des Indikator-Elementes bzw. des Indikator-Gemisches ist weiterhin notwendig, da die Gasdiffusionsprozesse und die Gleichgewichte im Ammonium-Chlorid temperaturabhängig sind.

Gemäß einer bevorzugten Ausgestaltung ist ein Flüssigkeitsproben-Gefäß vorgesehen, das eine Fensteröffnung aufweist, in der das Indikator-Element angeordnet ist. Das Indikator-Element wird von der zu dem Flüssigkeitsproben-Gefäß proximal angeordneten und die Fensteröffnung verschließenden gasdurchlässigen Membran, einer distal hierzu angeordneten gasundurchlässigen transparenten Membran und dem Indikator-Gemisch zwischen den Membranen gebildet. Die gasundurchlässige Membran kann als starre Kunststoff- oder Glasscheibe, kann jedoch auch als flexible Kunststoff-Folie ausgebildet sein. Das Gefäß kann eine Kammer mit einem Flüssigkeitsproben-Zu- und -ablauf sein, kann jedoch auch ein Abschnitt einer Flüssigkeitsproben-Leitung sein.

Das Indikator-Gemisch muss gegenüber der Atmosphäre isoliert sein, da anderenfalls der Dampfdruck der Atmosphäre die Einstellung eines Dampfdruck-Gleichgewichtes alleine zwischen der Flüssigkeitsprobe und dem Indikator-Gemisch verhindern würde.

Gemäß einer bevorzugten Ausgestaltung ist die Fensteröffnung oberhalb eines Gaspolsters angeordnet, das oberhalb der Flüssigkeitsprobe angeordnet ist. Die gasdut-chlässige Membran steht also nicht mehr in unmittelbarem Kontakt mit der Flüssigkeitsprobe, sondern steht ausschließlich mit dem Gaspolster oberhalb der Flüssigkeitsprobe in Kontakt. Auf diese Weise bildet sich in dem Indikator-Gemisch eine Ammonium-Gas-Konzentration, die die Ammonium-Konzentration in der Flüssigkeitsprobe widerspiegelt. Durch das Vorsehen eines Gaspolsters zwischen der gasdurchlässigen Membran und der Flüssigkeitsprobe wird ein unmittelbarer Kontakt der Flüssigkeitsprobe mit der gasdurchlässigen Membran vermieden. Hierdurch wird eine Verschmutzung der gasdurchlässigen Membran vermieden, verlängert sich die Haltbarkeit der gasdurchlässigen Membran und ist die gasdurchlässige Membran insgesamt weniger mechanischen Beanspruchungen ausgesetzt. Die Messung über ein Gaspolster ist mit den bisher verwendeten elektro-chemischen Elektroden nicht möglich, da diese ständig Wasser durch die Membran in das Gaspolster verlieren würden. Die neue Anordnung stellt hier den optimalen Flüssigkeitsgehalt durch das Gasdruck-Gleichgewicht ein.

Gemäß einer bevorzugten Ausführungsform weist das Indikator-Element eine kugelförmige gasdurchlässige Membran auf, in der das Indikator-Gemisch eingeschlossen ist. Eine gasundurchlässige transparente Membran ist nicht vorgesehen. Die auf diese Weise als Kugeln ausgebildeten Indikator-Elemente können in ein Flüssigkeitsproben-Gefäß gegeben werden. Anschließend wird der Messstrahl des Fotometers auf die Indikator-Element-Kugel bzw. die Indikator-Element-Kugeln gerichtet und kann der Ammoniumgehalt in der Flüssigkeitsprobe auf diese Weise bestimmt werden. Die kugelförmigen Indikator-Elemente eignen sich insbesondere zur mobilen Bestimmung des Ammoniums in einer Flüssigkeitsprobe, da eine derartige Messung praktisch überall vorgenommen werden kann.

Im Folgenden werden anhand der Zeichnungen mehrere Ausführungsbeispiele der Erfindung näher erläutert.

Es zeigen:
- Figur 1: ein erstes Ausführungsbeispiel einer Bestimmungs-Anordnung mit einem eine Fensteröffnung aufweisenden Flüssigkeitsproben-Gefäß und einem Reflexions-Fotometer,
- Figur 2: eine zweite Ausführungsform einer Bestimmungs-Anordnung mit einem Flüssigkeitsproben-Gefäß und einem Transmissions-Fotometer,
- Figur 3: ein drittes Ausführungsbeispiel einer Bestimmungs-Anordnung, bei der das Indikator-Element oberhalb eines Gaspolsters oberhalb der Flüssigkeitsprobe angeordnet ist,
- Figur 4: ein Indikator-Element der Bestimmungs-Anordnungen der Figuren 1-3,
- Figur 5: ein weiteres Ausführungsbeispiel einer Bestimmungs-Anordnung mit einem schlauchförmigen Flüssigkeitsproben-Gefäß und einem ringförmigen Indikator-Element und
- Figur 6: ein weiteres Ausführungsbeispiel einer Bestimmungs-Anordnung mit kugelförmigen Indikator-Elementen.

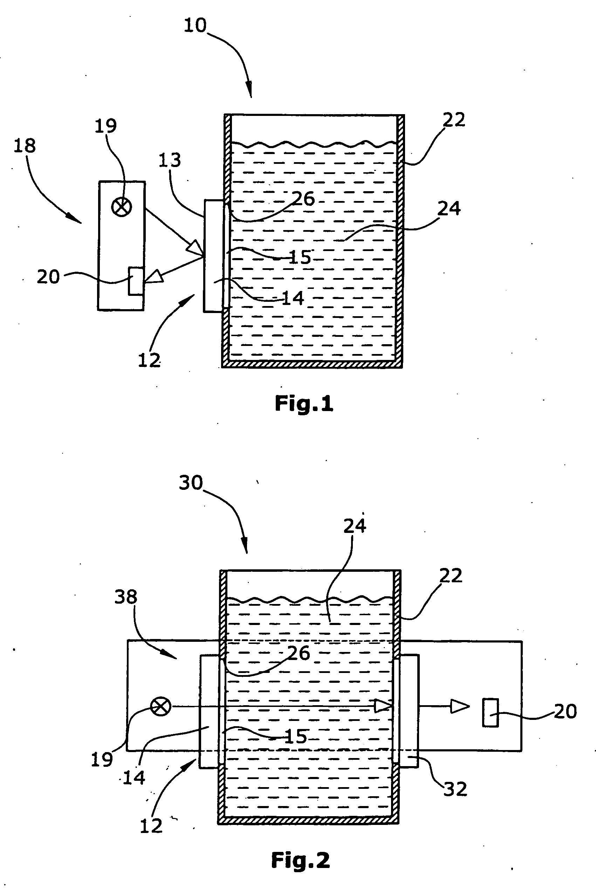

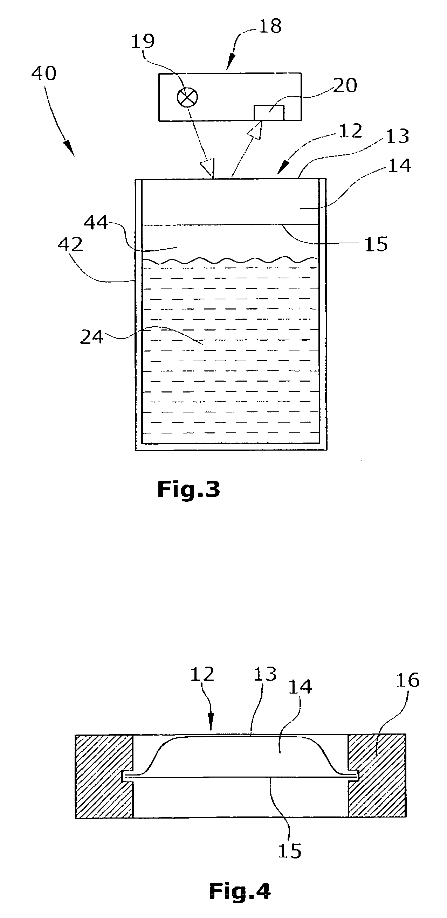

In der Figur 4 ist der Aufbau eines Indikator-Elementes 12 dargestellt, wie es in den Ausführungsbeispielen der Bestimmungs-Anordnungen 10,30,40 der Figuren 1-3 verwendet wird. Das Indikator-Element 12 weist einen Rahmen 16 auf, der den Rand einer gasdurchlässigen Membran 15 und einer gasundurchlässigen transparenten Membran 13 hält. Die Ränder der beiden Membranen 13,15 sind miteinander verschweißt oder auf andere Weise flüssigkeitsdicht miteinander verbunden.

In dem Zwischenraum zwischen den beiden Membranen 13,15 ist ein Indikator-Gemisch 14 angeordnet, das gelartig ausgebildet ist und sowohl Ammonium-Chlorid als auch einen pH-Indikator enthält. Durch die gelartige Konsistenz des Indikator-Gemisches 14 wird dauerhaft eine homogene Verteilung des Ammonium-Chlorides und des pH-Indikators über das gesamte Indikator-Gemisch-Volumen sichergestellt.

Als pH-Indikator kommen beispielsweise sogenannte Universal-Indikatoren in Frage. Diese enthalten Gemische verschiedener Indikatoren, die daher über einen weiten pH-Bereich arbeiten. Die gasdurchlässige Membran 15 besteht beispielsweise aus PTE

In der Figur 1 ist ein erstes Ausführungsbeispiel einer Anordnung 10 zur Bestimmung von Ammonium in einer Flüssigkeitsprobe 24 dargestellt. Die Flüssigkeitsprobe 24 ist eine Abwasser-Probe und füllt ein Flüssigkeitsproben-Gefäß 22.

Die gasdurchlässige Membran 15 kann als starre transparente Scheibe und die gasundurchlässige Membran 13 als starre Scheibe ausgebildet sein und beispielsweise aus Glas bestehen.

Das Flüssigkeitsproben-Gefäß 22 weist eine Fensteröffnung 26 auf, in der das Indikator-Element 12 angeordnet ist und die Fensteröffnung 26 verschließt. Die gasdurchlässige Membran 15 ist proximal angeordnet, d.h. verschließt unmittelbar die Fensteröffnung 26 und ist dem Gefäß-Inneren zugewandt.

Dem Indikator-Element 12 ist ein Fotometer 18 zugeordnet, das eine Lichtquelle 19 und einen Detektor 20 aufweist. Das Fotometer 18 arbeitet vorliegend als Reflexions-Fotometer. Das Fotometer 18 erfasst das Reflexionsspektrum des Indikator-Elementes 12.

### Die Ammonium-Bestimmungs-Anordnung 10 arbeitet wie folgt:

Nach dem Auffüllen des Gefäßes 22 mit der Flüssigkeitsprobe 24 diffundiert zunächst Wasserdampf aus der Flüssigkeitsprobe 24 durch die gasdurchlässige Membran 15 hindurch in das Indikator-Gemisch 14. Dieser Vorgang dauert so lange, bis der Dampfdruck in dem Indikator-Gemisch 14 dem der Flüssigkeitsprobe 24 entspricht. Auch das gasförmige Ammoniak aus der Flüssigkeitsprobe 24, das durch Alkalisch-Stellen der Flüssigkeitsprobe 24 aus dem Ammoniak hervorging, diffundiert durch die gasdurchlässige Membran 15 hindurch in das Indikator-Gemisch 14, bis sich ein Gleichgewicht einstellt.

Durch das in das Indikator-Gemisch eindringende Ammoniak-Gas verschiebt sich der pH-Wert der Ammonium-Chlorid-Lösung in dem Indikator-Gemisch 14. Der pH-Indikator nimmt eine dem vorliegenden pH-Wert entsprechende Farbe ein. Diese Farbe kann durch Auswertung des von dem Fotometer 18 ermittelten Reflexionsspektrums bestimmt werden. Aus dem pH-Wert wiederum lässt sich unmittelbar auf den Ammonium-Gehalt in der Flüssigkeitsprobe schließen.

In dem in der Figur 2 dargestellten Ausführungsbeispiel einer Bestimmungs-Anordnung 30 ist ein Fotometer 38 vorgesehen, das als Transmissions-Fotometer ausgebildet ist. Neben dem eine Fensteröffnung 26 des Gefäßes 22 verschließenden Indikator-Element 12 ist an einer gegenüberliegenden Seitenwand des Gefäßes 22 ein transparentes gasundurchlässiges Fenster 32 vorgesehen. Hierdurch ist eine transmissive fotometrische Messung möglich, bei der der Messstrahl das Indikator-Element 12, die Flüssigkeitsprobe 24 und das Fenster 32 durchläuft.

In der Figur 3 ist ein weiteres Ausführungsbeispiel einer Bestimmungs-Anordnung 40 dargestellt Hierbei ist das Flüssigkeitsproben-Gefäß 42 nach oben verschlossen. Die obere Öffnung, in Analogie zu den Ausführungsbeispielen der Figuren 1-3, die Fensteröffnung, wird vollständig verschlossen durch das Indikator-Element 12. Zwischen der Flüssigkeitsprobe 24 und dem Indikator-Element 12 bildet sich ein Gaspolster, das u.a. Ammonium-Gas mit dem Partialdruck des Ammoniums in der Flüssigkeitsprobe 24 enthält. Daher stellt sich auch in dem Indikator-Gemisch 14 des Indikator-Elementes 12 der gleiche Ammonium-Gas-Partialdruck ein, wie in der Flüssigkeitsprobe 24. Durch Vorsehen des Gaspolsters 44 wird jedoch ein unmittelbarer Kontakt der Flüssigkeitsprobe 24 mit der gasdurchlässigen Membran 15 vermieden. Hierdurch wird die Lebensdauer und die Zuverlässigkeit der Anordnung 40 erheblich verbessert.

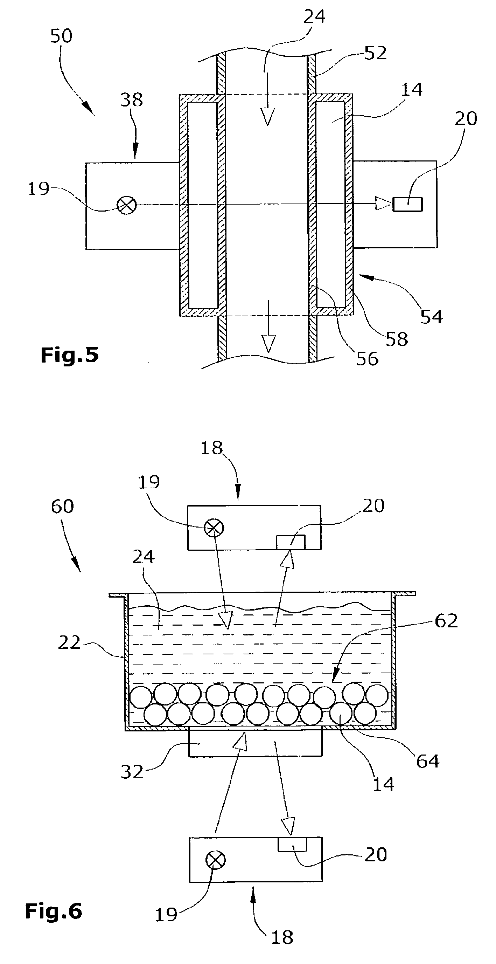

In der Figur 5 ist ein weiteres Ausführungsbeispiel einer Bestimmungs-Anordnung 50 dargestellt. Ein Abschnitt der Leitung 52 wird ausschließlich durch ein Indikator-Element 54 gebildet, das ebenfalls leitungsförmig ausgebildet ist, also beispielsweise im Querschnitt kreisrund ausgebildet ist. Der Innenumfang des Indikator-Elementes 54 wird also durch eine beispielsweise zylindrische gasdurchlässige Membran 56 gebildet, während die äußere Wand durch eine gasundurchlässige transparente Membran 58 gebildet wird. Als Fotometer 38 wird ein Transmissions-Fotometer verwendet, es kann aber auch als Reflexions-Fotometer ausgebildet sein.

In der Figur 6 ist ein weiteres Ausführungsbeispiel einer erfindungsgemäßen Anordnung 60 dargestellt. Am Boden des offenen Gefäßes 22 sind mehrere kugelförmige Indikator-Elemente angeordnet, die den Boden des Gefäßes 22 bedecken. Ein Indikator-Element 62 besteht aus einer kugelförmigen gasdurchlässigen Membran 64 und dem durch die Membran 64 eingeschlossenen Indikator-Gemisch 14.

Das Refiexions-Fotometer 18 kann ober- oder unterhalb des Flüssigkeitsspiegels der Flüssigkeitsprobe 24 angeordnet sein. Alternativ kann das Reflexions-Fotometer 18 auch unterhalb des Bodens des Gefäßes 22 angeordnet sein und durch eine transparente Fensterscheibe 32, die im Boden des Gefäßes 22 vorgesehen ist, die Farbe des Indikator-Gemisches in den kugelförmigen Indikator-Elementen 62 erfassen.

## Patentansprüche

1. Anordnung zur Bestimmung von Ammonium in einer Abwasser-Flüssigkeitsprobe (24), mit
einer Abwasser-Flüssigkeitsprobe (24),
einem Indikator-Element (12), das ein Indikator-Gemisch (14) aus Ammonium-Chlorid und einem pH-Indikator, und eine gasdurchlässige Membran (15) zwischen dem Indikator-Gemisch (14) und der Flüssigkeitsprobe (24) aufweist, wobei das Indikator-Gemisch (14) gegenüber der Atmosphäre isoliert ist, und
einem auf das Indikator-Element (12) gerichteten Fotometer (18) zur Bestimmung der Farbe des Indikator-Gemisches (14).

2. Anordnung zur Bestimmung von Ammonium in einer Flüssigkeitsprobe (24) nach Anspruch 1, **dadurch gekennzeichnet, dass** das Indikator-Gemisch (14) gelartig ausgebildet ist.

3. Anordnung zur Bestimmung von Ammonium in einer Flüssigkeitsprobe (24) nach Anspruch 1 oder 2, **dadurch gekennzeichnet, dass** ein Flüssigkeitsproben-Gefäß (22) eine Fensteröffnung (26) aufweist, in der das Indikator-Element (12) angeordnet ist, das von der zu dem Gefäß (22) proximal angeordneten gasdurchlässigen Membran (15), einer distal angeordneten gasundurchlässigen transparenten Membran (13) und dem Indikator-Gemisch (14) dazwischen gebildet wird.

4. Anordnung zur Bestimmung von Ammonium in einer Flüssigkeitsprobe (24) nach einem der Ansprüche 1-3, **dadurch gekennzeichnet, dass** die Fensteröffnung oberhalb eines Gaspolsters (44) oberhalb der Flüssigkeitsprobe (24) angeordnet ist.

5. Anordnung zur Bestimmung von Ammonium in einer Flüssigkeitsprobe (24) nach Anspruch 1 oder 2, **dadurch gekennzeichnet, dass** das Indikator-Element (62) eine kugelförmige gasdurchlässige Membran (64) aufweist, in der das Indikator-Gemisch (14) eingeschlossen ist.

## Claims

1. Device for determining ammonium in a waste water liquid sample (24), comprising
a waste water liquid sample (24),
an indicator element (12) including an indicator mixture (14) of ammonium chloride and a pH-indicator, and a gas-permeable membrane (15) between the indicator mixture (14) and the liquid sample (24), said indicator mixture (14) being isolated from atmosphere, and
a photometer (18) directed toward the indicator element (12) for the determination of the color of the indicator mixture (14).

2. Device for determining ammonium in a liquid sample (24) as defined in claim 1, **characterized in that** the indicator mixture (14) is of a gel-like nature.

3. Device for determining ammonium in a liquid sample (24) as defined in claim 1 or 2, **characterized in that** a liquid sample container (22) comprises a window opening (26) in which the indicator element (12) is arranged which is formed by the gas-permeable membrane (15) arranged proximally with respect to the container (15), a distally arranged gas-impermeable membrane (13) and the indicator mixture (14) disposed therebetween.

4. Device for determining ammonium in a liquid sample (24) as defined in one of claims 1 - 3, **characterized in that** the window opening is arranged above a gas cushion (44) above the liquid sample (24).

5. Device for determining ammonium in a liquid sample (24) as defined in claim 1 or 2, **characterized in that** the indicator element (62) comprises a spherical gas-permeable membrane (64) in which the indicator mixture (14) is enclosed.

## Revendications

1. Dispositif destiné à la détermination d'ammonium dans un échantillon de liquide des eaux usées (24), comprenant
un échantillon liquide des eaux usées (24),
un élément indicateur (12) comprenant une mélange indicatrice (14) en chloride d'ammonium et un indicateur de pH, et une membrane (15) perméable au gaz entre ladite mélange indicatrice (14) et l'échantillon de liquide (24), ladite mélange indicatrice (14) étant isolée de l'atmosphère, et
une photomètre (18) orientée vers ledit élément indicateur (12) pour déterminer la couleur de ladite mélange indicatrice (14).

2. Dispositif destiné à la détermination d'ammonium dans un échantillon de liquide (24) selon la revendication 1, **caractérisé en ce que** ladite mélange indicatrice (14) est similaire au gel.

3. Dispositif destiné à la détermination d'ammonium dans un échantillon de liquide (24) selon les revendications 1 ou 2, **caractérisé en ce qu'**un réceptacle d'échantillon de liquide (22) comprend une ouverture de fenêtre (26) dans laquelle est disposé ledit élément indicateur (12) formé par ladite membrane (15) perméable au gaz, située proximalement par rapport au réceptacle (22), une membrane (13) imperméable au gaz, située distalement, et ladite mélange indicatrice (14) entre les deux.

4. Dispositif destiné à la détermination d'ammonium dans un échantillon de liquide (24) selon l'une quelconque des revendications 1 - 3, **caractérisé en ce que** ladite ouverture de fenêtre est disposée au-dessus d'un coussin de gaz (44) au-dessus dudit échantillon de liquide (24).

5. Dispositif destiné à la détermination d'ammonium dans un échantillon de liquide (24) selon les revendications 1 ou 2, **caractérisé en ce que** ledit élément indicateur (62) comprend une membrane (64) sphérique, perméable au gaz, dans laquelle est enfermée ladite mélange indicatrice (14).
